(19) Europäisches Patentamt / European Patent Office / Office européen des brevets

(11) **EP 4 480 578 A1**

(12) **EUROPEAN PATENT APPLICATION**
published in accordance with Art. 153(4) EPC

(43) Date of publication:
**25.12.2024 Bulletin 2024/52**

(21) Application number: **23779697.4**

(22) Date of filing: **16.03.2023**

(51) International Patent Classification (IPC):
**B01J 20/26** *(2006.01)*      **C08F 20/06** *(2006.01)*
**E02B 3/04** *(2006.01)*

(52) Cooperative Patent Classification (CPC):
**B01J 20/26; C08F 20/06; E02B 3/04**

(86) International application number:
**PCT/JP2023/010431**

(87) International publication number:
**WO 2023/189679 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 JP 2022053634**

(71) Applicant: **Sumitomo Seika Chemicals Co., Ltd.
Kako-gun, Hyogo 675-0145 (JP)**

(72) Inventor: **OKAZAWA, Shiho
Himeji-shi, Hyogo 672-8076 (JP)**

(74) Representative: **Vossius & Partner
Patentanwälte Rechtsanwälte mbB
Siebertstrasse 3
81675 München (DE)**

(54) **WATER-ABSORBENT RESIN PARTICLES**

(57)  The present invention relates to a water-absorbent resin particle including a crosslinked polymer having, as a monomer unit, at least one ethylenically unsaturated monomer selected from the group consisting of (meth)acrylic acid and a salt thereof, a ratio of the (meth)acrylic acid and the salt thereof being 70% to 100% by mol with respect to a total amount of the monomer unit in the crosslinked polymer, in which a water-permeable rate is 0.40 to 2.50 g/sec.

## Description

### Technical Field

The present invention relates to a water-absorbent resin particle.

### Background Art

In a case of water disaster such as river flooding or high tide, sandbags are used as an emergency water stop measure for preventing inflow of soil and sand, water, and the like (for example, Patent Literature 1). In general, the sandbag is used to fill a bag with soil and sand. In recent years, with the increase in water disasters such as river flooding and high tide due to abnormal weather such as global warming, there is a need for sandbags with better utility, taking portability, storage space, and other conditions into consideration.

### Citation List

### Patent Literature

[Patent Literature 1] WO2018/159803A1

### Summary of Invention

### Technical Problem

Meanwhile, a water bag has been proposed in which water-absorbent resin particles used in paper diapers and sanitary materials such as sanitary products are packed in a water-permeable bag to absorb water by the water-absorbent resin particles during use.

The water bag is swollen with water during use, and water is dammed up by stacking the swollen water bags. In order to swell the water bag, it is necessary to immerse the water bag in a vat filled with water or in a place where the soil was dug to be filled with water, thereby swelling the water bag, and in a method of pouring water into the water bag with a hose or other equipment, the water bag could not be quickly and sufficiently swollen. On the other hand, in a case where the water bag is swollen with a vat or other means, the swollen water bag needs to be lifted and installed. Provided that the water bag can be quickly and sufficiently swollen with a hose or other equipment, the water bag can be formed at the installation place, and the load of installing the water bag can be reduced. Therefore, there has been a demand for a water bag that is rapidly and sufficiently swollen by water injection with a hose or other equipment.

An object of the present invention is to provide a water-absorbent resin particle that is suitable for a water bag and can be rapidly swollen even by water injection with a hose or other equipment.

### Solution to Problem

One aspect of the present invention relates to a water-absorbent resin particle including a crosslinked polymer having, as a monomer unit, at least one ethylenically unsaturated monomer selected from the group consisting of (meth) acrylic acid and a salt thereof, in which a ratio of the (meth)acrylic acid and the salt thereof is 70% to 100% by mol with respect to a total amount of a monomer unit in the crosslinked polymer. A water-permeable rate of the water-absorbent resin particle is 0.40 to 2.50 g/second.

The water-permeable rate is a value determined according to a procedure described below:

dispersing 0.250 g of the water-absorbent resin particle uniformly on a bottom of a first cylindrical container that has the mesh bottom, an inner diameter of 26 mm, an outer diameter of 35 mm, and a height of 105 mm;

forming a measurement unit that is provided with the first cylindrical container, the water-absorbent resin particle, a second cylindrical container having a mesh bottom, an inner diameter of 19 mm, an outer diameter of 25 mm, and a height of 145 mm, and a weight, by arranging the second cylindrical container into the first cylindrical container and placing the weight provided with a through-hole having an inner diameter of 20 mm on the second cylindrical container, in which a total mass of the second cylindrical container and the weight is 830 g, and liquid is injectable with the through-hole of the weight;

injecting 40.0 g of ion-exchanged water into the measurement unit at a constant rate of 10 g/sec from 180 mm vertically above a center of the bottom of the first cylindrical container;

recording a total amount of the liquid that passes through the water-absorbent resin particle in the measurement unit and flows out from the bottom of the first cylindrical container as an amount of water (g) flowed out from a gel, and recording a time period from when the ion-exchanged water is injected to when a last droplet flows out from the bottom of the first cylindrical container as a time (second) until the flowing out stops; and

calculating the water-permeable rate by an expression: the water-permeable rate (g/sec) = the amount of water that has flowed out from the gel (g)/the time period until the flowing out stops (sec).

**Advantageous Effects of Invention**

An object of the present invention is to provide a water-absorbent resin particle that is suitable for the water bag and can be rapidly swollen even by water injection with a hose or other equipment.

**Brief Description of Drawings**

Fig. 1 is a schematic diagram for illustrating a method of measuring a water-permeable rate.
Fig. 2 is a diagram showing an example of a water bag used for evaluation in Examples.
Fig. 3 is a schematic diagram for illustrating a method of measuring a height and a mass of the water bag.

**Description of Embodiments**

Hereinafter, some embodiments of the present invention will be described in detail. However, the present invention is not limited to the following embodiments.

In the present specification, "acrylic" and "methacrylic" are collectively referred to as "(meth)acrylic". "Acrylate" and "methacrylate" are also referred to as "(meth)acrylate". In a numerical value range described in a stepwise manner in the present specification, an upper limit value or a lower limit value of a numerical value range in a certain step can be optionally combined with an upper limit value or a lower limit value of a numerical value range in another step. In a numerical value range described in the present specification, the upper limit value or the lower limit value of the numerical value range may be replaced with the value shown in the examples. For materials exemplified in the present specification, one kind may be used alone, or two or more kinds may be used in combination. In a case where there are a plurality of substances corresponding to each of components in a composition, a content of each of the components in the composition means the total amount of the plurality of substances present in the composition unless otherwise specified. In the present specification, "physiological saline" is a sodium chloride aqueous solution having a concentration of 0.9% by mass, and the concentration of 0.9% by mass is based on the mass of the physiological saline.

A water-absorbent resin particle according to the present embodiment includes a crosslinked polymer having, as a monomer unit, at least one ethylenically unsaturated monomer selected from the group consisting of (meth)acrylic acid and a salt thereof, in which a ratio of the (meth)acrylic acid and the salt thereof is 70% to 100% by mol with respect to a total amount of a monomer unit in the crosslinked polymer. A water-permeable rate of the water-absorbent resin particle is 0.40 to 2.50 g/second.

The water-permeable rate is a value determined according to a procedure described below:

dispersing 0.250 g of the water-absorbent resin particle uniformly on a bottom of a first cylindrical container that has the mesh bottom, an inner diameter of 26 mm, an outer diameter of 35 mm, and a height of 105 mm;

forming a measurement unit that is provided with the first cylindrical container, the water-absorbent resin particle, a second cylindrical container having a mesh bottom, an inner diameter of 19 mm, an outer diameter of 25 mm, and a height of 145 mm, and a weight, by arranging the second cylindrical container into the first cylindrical container and placing the weight provided with a through-hole having an inner diameter of 20 mm on the second cylindrical container, in which a total mass of the second cylindrical container and the weight is 830 g, and liquid is injectable with the through-hole of the weight;

injecting 40.0 g of ion-exchanged water into the measurement unit at a constant rate of 10 g/sec from 180 mm vertically above a center of the bottom of the first cylindrical container;

recording a total amount of the liquid that passes through the water-absorbent resin particle in the measurement unit and flows out from the bottom of the first cylindrical container as an amount of water (g) flowed out from a gel, and recording a time period from when the ion-exchanged water is injected to when a last droplet flows out from the bottom of the first cylindrical container as a time (second) until the flowing out stops; and

calculating the water-permeable rate by an expression: the water-permeable rate (g/sec) = the amount of water that has flowed out from the gel (g)/the time period until the flowing out stops (sec). Details of the test conditions will be described in Examples later.

The lower limit of the water-permeable rate is 0.40 g/sec or more, and may be 0.45 g/sec or more, 0.50 g/sec or more, 0.55 g/sec or more, 0.60 g/sec or more, 0.70 g/sec or more, 0.75 g/sec or more, 0.80 g/sec or more, 0.85 g/sec or more, 0.90 g/sec or more, 0.95 g/sec or more, 1.00 g/sec or more, 1.05 g/sec or more, 1.10 g/sec or more, 1.15 g/sec or more, or 1.20 g/sec or more. Provided that the water-permeable rate is 0.40 g/second or more, water easily and evenly reaches across all the water-absorbent resin particles in the water bag even though the water is injected from the upper part of the water bag, and the height of the water bag is increased, resulting in an increase in the mass of the water bag. The upper limit of the water-permeable rate is 2.50 g/second or less, and may be 2.00 g/second or less, 1.50 g/second or less, 1.40 g/second or less, 1.35 g/second or less, 1.30 g/second or less, or 1.25 g/second or less. Provided that the water-permeable rate is 2.50 g/second or less, the water-absorbent resin particles in the water bag can quickly swell, so that the height of the water bag is increased, resulting in an increase in the mass of the water bag.

A time until the flowing out stops may be 2.00 seconds to 10.00 seconds. The time until the flowing out stops may be 2.25 seconds or more, 2.50 seconds or more, 2.75 seconds or more, 3.00 seconds or more, 3.25 seconds or more, 3.50 seconds or more, 3.75 seconds or more, or 4.00 seconds or more. The time until the flowing out stops may be 9.00 seconds or less, 8.00 seconds or less, 7.50 seconds or less, 7.00 seconds or less, 6.50 seconds or less, 6.00 seconds or less, or 5.00 seconds or less. Provided that the water-permeable rate is 0.40 to 2.50 g/sec and the time until the flowing out stops is within 10.00 seconds or less, the water bag is likely to quickly swell. Thus, the height of the water bag is further increased, resulting in an increase in the mass of the water bag. Provided that the water-permeable rate is 0.40 to 2.50 g/sec and the time until the flowing out stops is 2.00 seconds or more, no gel blocking occurs with the water-absorbent resin particles swollen, and the water is more likely to permeate the entire water bag, the height of the water bag is increased, resulting in an increase in the mass of the water bag.

The amount of water that has flowed out from the gel to the outside may be 0.80 g to 15.00 g. The amount of water that has flowed out from the gel to the outside may be 1.20 g or more, 1.60 g or more, or 2.00 g or more. The amount of water that has flowed out from the gel to the outside may be 12.50 g or less, 10.00 g or less, 9.00 g or less, or 8.50 g or less.

The water retention capacity of the water-absorbent resin particles in the physiological saline may be 45 g/g or less. The water retention capacity may be 20 g/g or more, 25 g/g or more, 30 g/g or more, or 32 g/g or more. The water retention capacity may be 45 g/g or less, 42 g/g or less, 40 g/g or less, 38 g/g or less, 37 g/g or less, 36 g/g or less, or 35 g/g or less. Provided that the water retention capacity is 45 g/g or less, the gel blocking is less likely to occur with the water-absorbent resin particles swollen. Therefore, it is considered that the water is more likely to permeate the entire water bag, and the height of the water bag is further increased, resulting in a more increase in the mass. The water retention capacity can be measured by a method described in Examples described later.

A shape of the water-absorbent resin particle is not particularly limited, and may be, for example, a substantially spherical shape, a crushed shape, or a granular shape or may be a particle formed such that primary particles with each of these shapes aggregate.

The median particle diameter of the water-absorbent resin particle may be, for example, 200 $\mu$m or more, 250 $\mu$m or more, or 300 $\mu$m or more. The median particle diameter of the water-absorbent resin particles may be, for example, 600 $\mu$m or less, 500 $\mu$m or less, or 450 $\mu$m or less. The median particle diameter may be, for example, 200 $\mu$m or more and 600 $\mu$m or less, 200 $\mu$m or more and 500 $\mu$m or less, 200 $\mu$m or more and 450 $\mu$m or less, 250 $\mu$m or more and 600 $\mu$m or less, 250 $\mu$m or more and 500 $\mu$m or less, 250 $\mu$m or more and 450 $\mu$m or less, 300 $\mu$m or more and 600 $\mu$m or less, 300 $\mu$m or more and 500 $\mu$m or less, or 300 $\mu$m or more and 450 $\mu$m or less.

The median particle diameter can be measured by the following method. JIS standard sieves are combined in the following order from the upper side: sieves having openings of 850 $\mu$m, 600 $\mu$m, 500 $\mu$m, 425 $\mu$m, 300 $\mu$m, 250 $\mu$m, and 180 $\mu$m, and a tray. 5 g of the water-absorbent resin particles are placed onto the combined uppermost sieve and classified by using a continuous fully automatic sonic vibration-type sieving measuring apparatus (Robot shifter RPS-205, manufactured by Seishin Enterprise Co., Ltd.). After classification, the mass of the particles remaining on each sieve is calculated as a mass percentage with respect to the total amount to determine a particle size distribution. The relationship between the opening of the sieve and the integrated value of the mass percentage of the particles remaining on the sieve is plotted on logarithmic probability paper by integrating in the order from the one having the largest particle diameter on the sieve with respect to this particle size distribution. By connecting the plots on the probability paper with a straight line, the particle diameter corresponding to the cumulative mass percentage of 50% by mass is obtained as the median particle diameter. Other details of the test conditions will be described in Examples described later.

The water-absorbent resin particle according to the present embodiment contains a crosslinked polymer having, as a monomer unit, at least one ethylenically unsaturated monomer selected from the group consisting of (meth)acrylic acid and a salt thereof.

The crosslinked polymer may have another ethylenically unsaturated monomer in addition to (meth)acrylic acid and a salt thereof, as a monomer unit. The other ethylenically unsaturated monomer may be contained in at least one compound selected from the group consisting of 2-(meth)acrylamide-2-methylpropanesulfonic acid and a salt thereof, (meth)acrylamide, N,N-dimethyl (meth)acrylamide, 2-hydroxyethyl (meth)acrylate, N-methylol (meth)acrylamide, polyethylene glycol mono(meth)acrylate, N,N-diethylaminoethyl (meth)acrylate, N,N-diethylaminopropyl (meth)acrylate, and diethylaminopropyl (meth)acrylamide. In a case where the other ethylenically unsaturated monomer has an amino group, the amino group may be quaternized.

In a case where the monomer unit in the crosslinked polymer has an acid group, the monomer unit may be used in a polymerization reaction after neutralizing the acid group with an alkaline neutralizing agent. The neutralization degree of the ethylenically unsaturated monomer by the alkaline neutralizing agent may be 50% to 100% by mol, 60% to 90% by mol, 70% to 85% by mol, or 75% to 80% by mol of the acid group in the ethylenically unsaturated monomer, from the viewpoint of increasing an osmotic pressure of the obtained water-absorbent resin particle, and further enhancing water-absorbent characteristics (such as a water absorption amount). Examples of the alkaline neutralizing agent include alkali metal salts such as sodium hydroxide, sodium carbonate, sodium hydrogen carbonate, potassium hydroxide, and potassium carbonate; and ammonia. The alkaline neutralizing agent may be used alone, or two or more kinds thereof may be used in combination. The alkaline neutralizing agent may be used in the form of an aqueous solution to simplify the neutralization operation.

In the crosslinked polymer, the ratio of (meth)acrylic acid and a salt thereof is 70% to 100% by mol with respect to the total amount of the monomer units in the crosslinked polymer, and may be, for example, 80% to 100% by mol or 90% to 100% by mol.

The water-absorbent resin particle can be produced by, for example, a method including a step of polymerizing a monomer including the above-mentioned ethylenically unsaturated monomer in a reaction solution containing the monomer and a radical polymerization initiator. As the radical polymerization initiator, a water-soluble radical polymerization initiator can be used.

Examples of methods of polymerization include a reverse phase suspension polymerization method, an aqueous solution polymerization method, a bulk polymerization method, and a precipitation polymerization method. The polymerization method may be the reverse phase suspension polymerization method or the aqueous solution polymerization method from the viewpoints of facilitating securement of good water-absorbent characteristics of the obtained water-absorbent resin particle and control of a polymerization reaction. In the following, as a method for polymerizing the ethylenically unsaturated monomer, a reverse phase suspension polymerization method will be described as an example.

The ethylenically unsaturated monomer is usually preferably used as an aqueous solution. The concentration of the ethylenically unsaturated monomers in the aqueous solution containing the ethylenically unsaturated monomers (hereinafter, simply referred to as a "monomer aqueous solution") may be 20% by mass or more and a saturated concentration or less, 25% to 70% by mass, or 30% to 55% by mass. Examples of the water used in the aqueous solution include tap water, distilled water, and ion-exchanged water.

Examples of the radical polymerization initiator include persulfates such as potassium persulfate, ammonium persulfate, and sodium persulfate; azo compounds such as 2,2'-azobis(2-amidinopropane) dihydrochloride, 2,2'-azobis[2-(N-phenylamidino)propane] dihydrochloride, 2,2'-azobis[2-(N-allylamidino)propane] dihydrochloride, 2,2'-azobis[2-(2-imidazolin-2-yl)propane] dihydrochloride, 2,2'-azobis{2-[1-(2-hydroxyethyl)-2-imidazolin-2-yl]propane} dihydrochloride, 2,2'-azobis{2-methyl-N-[1,1-bis(hydroxymethyl)-2-hydroxyethyl]propionamide}, 2,2'-azobis[2-methyl-N-(2-hydroxyethyl)-propionamide], and 4,4'-azobis(4-cyanovaleric acid); peroxides such as methyl ethyl ketone peroxide, methyl isobutyl ketone peroxide, di-t-butyl peroxide, t-butyl cumyl peroxide, t-butyl peroxyacetate, t-butyl peroxyisobutyrate, t-butyl peroxypivalate, and hydrogen peroxide; and other water-soluble radical polymerization initiators.

The radical polymerization initiator may be used alone, or two or more kinds thereof may be used in combination. The radical polymerization initiator is preferably at least one selected from the group consisting of a persulfate and a peroxide and more preferably a persulfate, from the viewpoint that the water-permeable rate is easily adjusted within the above-mentioned range.

The use amount of the radical polymerization initiator may be 0.28 mmol or more with respect to 1 mol of the ethylenically unsaturated monomer, from the viewpoint that the water-permeable rate is easily adjusted within the above-mentioned range. The use amount of the radical polymerization initiator may be, for example, 10.00 mmol or less, 5.00 mmol or less, 1.00 mmol or less, 0.80 mmol or less, or 0.70 mmol or less with respect to 1 mol of the ethylenically unsaturated monomer, from the viewpoint of easily reducing the occurrence of a rapid polymerization reaction. The use amount of the radical polymerization initiator may be, for example, 0.28 mmol or more and 10.00 mmol or less.

Provided that the radical polymerization initiator is at least one selected from the group consisting of a persulfate and a peroxide, or the use amount of the radical polymerization initiator is 0.28 mmol or more with respect to 1 mol of the ethylenically unsaturated monomer, the radical polymerization initiator is likely to remain as unreacted in a hydrogel-like polymer obtained by the polymerization reaction. Entanglement of molecular chains is increased in the vicinity of the surface because the hydrogel-like polymer is heated with the unreacted radical polymerization initiator remaining, and water-absorbent resin particles having a large amount of physical crosslinking in the vicinity of the surface thus tends to be obtained. Adjusting the degree of crosslinking by the physical crosslinking in the vicinity of the surface enables the quick swelling, causes less occurrence of the gel blocking or other restriction during the swelling, and facilitates liquid permeation across all the water-absorbent resin particles. As a result, the water-absorbent resin particle having the water-permeable rate within the above-mentioned range are easily obtained.

In the reverse phase suspension polymerization method, a monomer aqueous solution is dispersed in a hydrocarbon dispersion medium in the presence of a surfactant, and polymerization of the ethylenically unsaturated monomer can be performed using a radical polymerization initiator or the like.

Examples of the surfactant include a nonionic surfactant, an anionic surfactant, and other surfactants. Examples of the nonionic surfactant include sorbitan fatty acid esters, polyglycerin fatty acid esters, sucrose fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkylphenyl ethers, polyoxyethylene castor oil, polyoxyethylene hydrogenated castor oil, alkylallyl formaldehyde condensed polyoxyethylene ethers, polyoxyethylene polyoxypropylene block copolymers, polyoxyethylene polyoxypropyl alkyl ethers, and polyethylene glycol fatty acid esters. Examples of the anionic surfactant include fatty acid salts, alkylbenzene sulfonate, alkylmethyl taurate, polyoxyethylene alkylphenyl ether sulfuric acid ester salts, polyoxyethylene alkyl ether sulfonic acid salts, phosphoric acid esters of polyoxyethylene alkyl ethers, and phosphoric acid esters of polyoxyethylene alkyl allyl ethers. The surfactant may be used alone, or two or more kinds thereof may be used in combination.

From the viewpoint that the state of the W/O type reverse phase suspension is good, and the water-absorbent resin particle having a suitable particle diameter is easily obtained, and the viewpoint of industrial availability, the surfactant may contain at least one compound selected from the group consisting of sorbitan fatty acid esters, polyglycerin fatty acid esters, and sucrose fatty acid esters. The surfactant may include sucrose fatty acid esters or may include sucrose stearic acid esters from the viewpoint that water-absorbent characteristics of the obtained water-absorbent resin particle are then easily improved.

The use amount of the surfactant may be 0.05 to 10 parts by mass, 0.08 to 5 parts by mass, or 0.1 to 3 parts by mass, with respect to 100 parts by mass of the monomer aqueous solution, from the viewpoint of obtaining sufficient effect for the use amount and economic efficiency.

For the reverse phase suspension polymerization, a polymeric dispersant may be used in combination with the above-mentioned surfactant. Examples of the polymeric dispersant include maleic acid anhydride-modified polyethylene, maleic acid anhydride-modified polypropylene, a maleic acid anhydride-modified ethylene-propylen copolymer, a maleic acid anhydride-modified EPDM (ethylene propylene diene terpolymer), maleic acid anhydride-modified polybutadiene, a maleic acid anhydride-ethylene copolymer, a maleic acid anhydride-propylene copolymer, a maleic acid anhydride-ethylene-propylene copolymer, a maleic acid anhydride-butadiene copolymer, polyethylene, polypropylene, an ethylene-propylene copolymer, oxidized polyethylene, oxidized polypropylene, an oxidized ethylene-propylene copolymer, an ethylene-acrylic acid copolymer, ethyl cellulose, and ethyl hydroxyethyl cellulose. The polymeric dispersant may be used alone or may be used in combination of two or more kinds thereof. From the viewpoint of better dispersion stability of monomers, the polymeric dispersant may include at least one selected from the group consisting of maleic acid anhydride-modified polyethylene, maleic acid anhydride-modified polypropylene, a maleic acid anhydride-modified ethylene-propylene copolymer, a maleic acid anhydride-ethylene copolymer, a maleic acid anhydride-propylene copolymer, a maleic acid anhydride-ethylene-propylene copolymer, polyethylene, polypropylene, an ethylene-propylene copolymer, oxidized polyethylene, oxidized polypropylene, and an oxidized ethylene-propylene copolymer.

The use amount of the polymeric dispersant may be 0.05 to 10 parts by mass, 0.08 to 5 parts by mass, or 0.1 to 3 parts by mass, with respect to 100 parts by mass of the monomer aqueous solution, from the viewpoint of obtaining sufficient effect for the use amount and economic efficiency.

The hydrocarbon dispersion medium may contain at least one compound selected from the group consisting of chain aliphatic hydrocarbons having 6 to 8 carbon atoms and alicyclic hydrocarbons having 6 to 8 carbon atoms. Examples of the hydrocarbon dispersion medium include chain aliphatic hydrocarbons such as n-hexane, n-heptane, 2-methylhexane, 3-methylhexane, 2,3-dimethylpentane, 3-ethylpentane, and n-octane; alicyclic hydrocarbons such as cyclohexane, methylcyclohexane, cyclopentane, methylcyclopentane, trans-1,2-dimethylcyclopentane, cis-1,3-dimethylcyclopentane, and trans-1,3-dimethylcyclopentane; and aromatic hydrocarbons such as benzene, toluene, and xylene. The hydrocarbon dispersion medium may be used alone, or two or more kinds thereof may be used in combination.

From the viewpoint of industrial availability and stable quality, the hydrocarbon dispersion medium may contain at least one selected from the group consisting of n-heptane and cyclohexane. From the same viewpoint, as the mixture of the above-mentioned hydrocarbon dispersion medium, for example, a commercially available Exxsol Heptane (manufactured by ExxonMobil: containing 75% to 85% of n-heptane and isomeric hydrocarbons) may be used.

The use amount of the hydrocarbon dispersion medium may be 30 to 1,000 parts by mass, 40 to 500 parts by mass, or 50 to 300 parts by mass, with respect to 100 parts by mass of the monomer aqueous solution, from the viewpoint that polymerization heat is appropriately removed, and a polymerization temperature is easily controlled. Provided that the use amount of the hydrocarbon dispersion medium is 30 parts by mass or more, the polymerization temperature tends to be easily controlled. Provided that the use amount of the hydrocarbon dispersion medium is 1000 parts by mass or less, the productivity of polymerization tends to be improved, which is economical.

Crosslinking by self-crosslinking may occur during polymerization, but the crosslinking may be carried out by further using an internal crosslinking agent. In a case where an internal crosslinking agent is used, water-absorbent characteristics of the water-absorbent resin particle are easily controlled. The internal crosslinking agent is usually added to a reaction solution during the polymerization reaction. Examples of the internal crosslinking agent include di- or tri(meth) acrylic acid esters of polyols such as ethylene glycol, propylene glycol, trimethylolpropane, glycerin, polyoxyethylene glycol, polyoxypropylene glycol, and polyglycerin; unsaturated polyesters obtained by reacting the above-mentioned polyols with unsaturated acids (such as maleic acid and fumaric acid); bis(meth)acrylamides such as N,N'-methylene bis(meth)acrylamide; di- or tri(meth)acrylic acid esters obtained by reacting polyepoxide with (meth)acrylic acid; di(meth) acrylic acid carbamyl esters obtained by reacting polyisocyanate (such as tolylene diisocyanate and hexamethylene diisocyanate) with hydroxyethyl (meth)acrylate; compounds having two or more polymerizable unsaturated groups such as allylated starch, allylated cellulose, diallyl phthalate, N,N',N"-triallyl isocyanurate, and divinylbenzene; polyglycidyl compounds such as (poly)ethylene glycol diglycidyl ether, (polypropylene glycol diglycidyl ether, (poly)glycerin diglycidyl ether, (poly)glycerin triglycidyl ether, (polypropylene glycol polyglycidyl ether, and polyglycerol polyglycidyl ether; haloepoxy compounds such as epichlorohydrin, epibromohydrin, and $\alpha$-methyl epichlorohydrin; compounds having two or more reactive functional groups such as isocyanate compounds (2,4-tolylene diisocyanate and hexamethylene diisocyanate), and other internal crosslinking agents. These internal crosslinking agents may be used alone or two or more kinds thereof may be used in combination. From the viewpoint that the uniformity of the crosslinking in the water-absorbent resin particles is likely to be increased, the internal crosslinking agent may contain a polyglycidyl compound or a diglycidyl ether compound or may contain at least one selected from the group consisting of a (poly)ethylene glycol diglycidyl ether, a (polypropylene glycol diglycidyl ether, and a (poly)glycerin diglycidyl ether.

The use amount of the internal crosslinking agent may be 0 mmol or more, 0.02 mmol or more, 0.03 mmol or more, 0.04 mmol or more, or 0.05 mmol or more, and may be 0.1 mol or less per 1 mol of the ethylenically unsaturated monomer, from the viewpoints that water-soluble properties are minimized by the appropriate crosslinking of the obtained polymer, and a sufficient water absorption amount is thus easily obtained.

An aqueous phase containing an ethylenically unsaturated monomer, a radical polymerization initiator, and as necessary, an internal crosslinking agent, and the like; and an oil phase containing a hydrocarbon dispersant, and as necessary, a surfactant and a polymeric dispersant, and the like can be mixed and heated under stirring to carry out the reverse phase suspension polymerization in a water-in-oil system.

A monomer aqueous solution containing the ethylenically unsaturated monomer is dispersed in a hydrocarbon dispersion medium in the presence of a surfactant (as necessary, additionally a polymeric dispersant) when the reverse phase suspension polymerization is performed. At this time, the timing of adding the surfactant, the polymeric dispersant, or the like may be either before or after the addition of the monomer aqueous solution as long as the polymerization reaction is not yet started.

From the viewpoint of easily reducing the amount of the hydrocarbon dispersion medium remaining in the obtained water-absorbent resin particle, polymerization may be performed after the monomer aqueous solution is dispersed in the hydrocarbon dispersion medium in which the polymeric dispersant is dispersed, followed by further dispersing the surfactant.

The reverse phase suspension polymerization can be performed in one stage, or in multiple stages of two or more stages. The reverse phase suspension polymerization may be performed in two or three stages from the viewpoint of increasing productivity.

In a case where the reverse phase suspension polymerization is performed in multiple stages of two or more stages, a first stage of the reverse phase suspension polymerization method is performed, followed by the addition of the ethylenically unsaturated monomer to the reaction mixture, which is obtained in the first polymerization reaction, to be mixed, and second and subsequent stages of the reverse phase suspension polymerization method may be performed in the same method as the first stage. For the reverse phase suspension polymerization at each stage of the second and subsequent stages, in addition to the ethylenically unsaturated monomer, the above-mentioned radical polymerization initiator may be added within the range of a molar ratio of each component with respect to the above-mentioned ethylenically unsaturated monomer, based on the amount of the ethylenically unsaturated monomer added during the second and subsequent stages of the reverse phase suspension polymerization method, to perform the reverse phase suspension polymerization. For the reverse phase suspension polymerization at each stage of the second and subsequent stages, an internal crosslinking agent may be used as necessary. In a case of using the internal crosslinking agent, the internal crosslinking agent may be added within the range of a molar ratio of each component with respect to the above-mentioned ethylenically unsaturated monomer based on the amount of the ethylenically unsaturated monomer provided in each stage, to perform the reverse phase suspension polymerization.

A temperature of the polymerization reaction may vary depending on the radical polymerization initiator to be used. The temperature of the polymerization reaction may be 20°C to 150°C or 40°C to 120°C, from the viewpoints that the polymerization is allowed to promptly proceed to shorten a polymerization time to increase economic efficiency increases, and polymerization heat is easily removed to smoothly perform the reaction. The reaction time may be, for example, 0.5 to 4 hours. The completion of the polymerization reaction can be confirmed upon the stopping of the temperature rise in the reaction system, for example. Thus, the polymer of the ethylenically unsaturated monomer is usually obtained as a hydrogel-like polymer.

The hydrogel-like polymer obtained after the polymerization may be heated with water being present on a surface to some extent. The hydrogel-like polymer may be heated in a state in which the moisture percentage of the hydrogel-like polymer is within a range of 145% by mass to 220% by mass when the heating is started, from the viewpoints that the water-absorbent resin particles having a large amount of physical crosslinking in the vicinity of the surface are easily obtained, and the water-absorbent resin particles having the water-permeable rate within the above-mentioned range are more easily obtained. The moisture percentage of the hydrogel-like polymer at the start of heating may be the moisture percentage of the hydrogel-like polymer at the time when the heating is started at a temperature of 70°C or higher. The moisture percentage of the hydrogel-like polymer may be, for example, 150% by mass to 200% by mass.

The moisture percentage (% by mass) of the hydrogel-like polymer is calculated by the following expression.

$$\text{Moisture percentage} = (\text{Ww}/\text{Ws}) \times 100$$

Ww: Water amount of the hydrogel-like polymer obtained by adding water amount added and water amount used if necessary when mixing a radical polymerization initiator, a flocculant, a surface crosslinking agent or the like to an amount obtained by subtracting water amount discharged to the outside of the system in the step such as a drying step from water amount contained in a monomer aqueous solution before polymerization in entire polymerization step.

Ws: Solid content calculated from the charged amount of materials such as the ethylenically unsaturated monomer, the crosslinking agent, and the radical polymerization initiator, which constitute the hydrogel-like polymer.

The moisture percentage of the hydrogel-like polymer can be controlled within the above-mentioned range by, for example, a method of adding water to the hydrogel-like polymer obtained after the polymerization reaction, a method of allowing water to remain preliminarily in the hydrogel-like polymer obtained by the polymerization reaction, or a method of combining aforementioned methods.

The heating temperature when the hydrogel-like polymer is heated may be, for example, 70°C or higher and 250°C or lower. The lower limit of the heating temperature may be, for example, 90°C or higher, 110°C or higher, or 120°C or higher. The above-mentioned heating temperature may be a set temperature of the device for heating the hydrogel-like polymer. Examples of a method of heating the hydrogel-like polymer include a method of immersing a reaction container containing the hydrogel-like polymer in an oil bath set to the above-mentioned heating temperature.

The hydrogel-like polymer that is obtained after the polymerization may be heated in the presence of the radical polymerization initiator, from the viewpoints that the water-absorbent resin particles having a large amount of physical crosslinking in the vicinity of the surface are easily obtained, and the water-absorbent resin particles having the water-permeable rate within the above-mentioned range are more easily obtained. The radical polymerization initiator may be an unreactive product of the radical polymerization initiator used in the polymerization step, or may be a radical polymerization initiator added to the hydrogel-like polymer after the polymerization reaction. In a case where the radical polymerization initiator is added to the hydrogel-like polymer after the polymerization reaction, the radical polymerization initiator may be added together with water.

The hydrogel-like polymer may be heated to remove at least part of water. For example, the water can be removed by heating the hydrogel-like polymer in a state of being dispersed in a hydrocarbon dispersion medium from the outside to perform azeotropic distillation and refluxing the hydrocarbon dispersion medium.

Crosslinking may be obtained on surface layer portions (surface crosslinking) of the hydrogel-like polymers. The water-absorbent characteristics of the water-absorbent resin particle are easily controlled by performing the surface crosslinking.

Examples of crosslinking agents for performing the surface crosslinking (surface crosslinking agents) include compounds having two or more reactive functional groups. Examples of the crosslinking agent include polyols such as ethylene glycol, propylene glycol, 1,4-butanediol, trimethylolpropane, glycerin, polyoxyethylene glycol, polyoxypropylene glycol, and polyglycerin; polyglycidyl compounds such as (poly)ethylene glycol diglycidyl ether, (poly)glycerin diglycidyl ether, (poly)glycerin triglycidyl ether, trimethylolpropane triglycidyl ether, (poly)propylene glycol polyglycidyl ether, and (poly)glycerol polyglycidyl ether; haloepoxy compounds such as epichlorohydrin, epibromohydrin, and $\alpha$-methyl epichlorohydrin; isocyanate compounds such as 2,4-tolylene diisocyanate, and hexamethylene diisocyanate; oxetane compounds such as 3-methyl-3-oxetane methanol, 3-ethyl-3-oxetane methanol, 3-butyl-3-oxetane methanol, 3-methyl-3-oxetane ethanol, 3-ethyl-3-oxetane ethanol, and 3-butyl-3-oxetane ethanol; oxazoline compounds such as 1,2-ethylenebisoxazoline; carbonate compounds such as ethylene carbonate; hydroxyalkylamide compounds such as bis[N,N-di($\beta$-hydroxyethyl)]adipamide; and other crosslinking agents. These crosslinking agents may be used alone or two or more kinds thereof may be used in combination. The crosslinking agent may include a polyglycidyl compound, or may include at least one selected from the group consisting of (poly)ethylene glycol diglycidyl ether, (poly)glycerin diglycidyl ether, (poly)glycerin triglycidyl ether, (polypropylene glycol polyglycidyl ether, and polyglycerol polyglycidyl ether.

The use amount of the surface crosslinking agent may be 0.00001 to 0.02 moles, 0.00005 to 0.01 moles, or 0.0001 to 0.005 moles with respect to 1 mole of the ethylenically unsaturated monomer used for the polymerization, from the viewpoint of exhibiting suitable water-absorbent characteristics by the obtained hydrogel-like polymer appropriately crosslinking.

After the surface crosslinking, the water and hydrocarbon dispersion medium may be removed by a known method to dry the surface-crosslinked hydrogel-like polymer. In this manner, polymer particles, a dried product of the surface-crosslinked hydrogel-like polymer, can be obtained.

The water-absorbent resin particle of the present embodiment may be formed of only the polymer particles, but can further contain various additional components selected from a gel stabilizing agent, a metal chelating agent, and a flowability improver (lubricant), for example. The additional components can be disposed inside the polymer particle or on the surface of the polymer particle, or both thereof. The additional components may be a flowability improver (lubricant). A flowability improver may be inorganic particles. Examples of the inorganic particles include silica particles such as amorphous silica.

The water-absorbent resin particle may contain a plurality of the inorganic particles disposed on the surface of the polymer particle. For example, the polymer particles and the inorganic particles can be mixed to dispose the inorganic particles on the surfaces of the polymer particles. These inorganic particles may be silica particles such as amorphous silica. In a case where the water-absorbent resin particle contains the inorganic particles disposed on the surfaces of the polymer particles, a proportion of the inorganic particles may be 0.01% by mass or more or 0.05% by mass or more, and 5.0% by mass or less, 1.0% by mass or less, or 0.5% by mass or less, with respect to the mass of the polymer particles. The inorganic particles herein usually have a minute size as compared with the size of the polymer particle. For example, the average particle diameter of the inorganic particles may be 0.1 to 50 $\mu$m, 0.5 to 30 $\mu$m, or 1 to 20 $\mu$m. The average particle diameter herein can be a value measured by a dynamic light scattering method or a laser diffraction/scattering method.

As for the water-absorbent resin particle according to the present embodiment, it is possible to obtain the water bag that can be quickly swollen even by water injection with a hose or other equipment. Such a water bag enables the formation of the water bag at the installation place and the reduction of the load of installing the swollen water bag.

As for the water-absorbent resin particle according to the present embodiment, the height of the water bag measured by the following method may be 10 mm or more, 15 mm or more, 20 mm or more, or 23 mm or more, and may be 40 mm or less or 30 mm or less. As for the water-absorbent resin particle according to the present embodiment, the mass of the water bag measured by the following method may be 120 g or more, 130 g or more, 140 g or more, 150 g or more, 155 g or more, 160 g or more, 170 g or more, 180 g or more, 185 g or more, 190 g or more, or 195 g or more, and may be 215 g or less or 205 g or less.

The height of the water bag and the mass of the water bag are measured by the following method. A water bag for evaluation made of a non-woven fabric bag of 100 mm × 100 mm and containing 4.0 g of water-absorbent resin particles, which are stored in the non-woven fabric bag, is prepared. In an environment of a temperature of 25 ± 2°C and a humidity of 50 ± 10%, the water bag for evaluation is placed on a wire mesh, and a weight is placed on the water bag for evaluation. The weight has a square main surface having each side of 100 mm, a through-hole having a diameter of 47 mm is provided at the center of the main surface, and the weight has a height of 15 mm. The weight is disposed such that the through-hole is located at a central portion of the water bag for evaluation. The ion-exchanged water is injected into the water bag for evaluation from a position vertically 5 cm above the center of the water bag for evaluation through the through-hole of the weight. The ion-exchanged water in an amount of 1000 mL is injected at a constant rate of 10 g/sec. A time of 30 seconds after the ion-exchanged water was injected, heights from the wire mesh to the corners of the bottom surface of the weight are measured at four locations, and an average value thereof is recorded as the height (mm) of the water bag. After the measurement is completed, the weight is removed, and the mass (g) of the water bag is measured.

The water-absorbent resin particle can be used, for example, in a water bag, a sanitary product, and an animal excrement treatment material. Examples of the sanitary product include paper diapers, sanitary napkins, mild incontinence pads, and tampons. Examples of the animal excrement treatment material include a pet sheet and a toilet formulation for a dog or a cat.

An embodiment of the water bag includes a water-permeable bag and the above-mentioned water-absorbent resin particles stored in the water-permeable bag. As for the water bag containing the water-absorbent resin particle according to the present embodiment, it is possible to quickly swell the water bags even by water injection with a hose or other equipment. The material constituting the water-permeable bag may be a non-woven fabric or the like. The water bag may be formed into a bag shape by thermal fusion, sewing, adhesion with an adhesive, or the like.

**Examples**

Hereinafter, the present invention will be more specifically described with reference to examples. However, the present invention is not limited to these examples.

[Production of Water-absorbent Resin Particles]

(Example 1)

A round-bottomed cylindrical separable flask having an inner diameter of 11 cm and an internal volume of 2 L equipped with a reflux cooling device, a dropping funnel, a nitrogen gas introduction tube, and a stirrer was prepared. As the stirrer, a stirrer blade having two stages of four inclined paddle blades with a blade diameter of 5 cm was used. 300 g of n-heptane as a hydrocarbon dispersion medium, 0.736 g of maleic acid-modified ethylene-propylene copolymer (Mitsui Chemicals, Inc., Hi-Wax 1105A) as a polymeric dispersant, and 0.736 g of sucrose stearic acid ester (HLB: 3, Mitsubishi-Chemical Foods Corporation, Ryoto Sugar Ester S-370) as a surfactant were added to the above-mentioned flask, and the mixture was stirred at a rotation speed of a stirrer of 550 rpm while being heated to 80°C, and the dispersant and surfactant were dissolved and then cooled to 60°C.

On the other hand, 92.0 g (1.03 mol) of a 80.5% by mass aqueous solution of acrylic acid serving as an ethylenically unsaturated monomer was charged in another beaker having an internal volume of 300 mL, 103.0 g of a 30% by mass aqueous solution of sodium hydroxide was added dropwise thereto while being cooled from the outside to perform 75% by mol of neutralization, and thereafter, 0.0736 g (0.272 mmol) of potassium persulfate serving as a peroxide, 0.0028 g (0.016 mmol) of ethylene glycol diglycidyl ether serving as an internal crosslinking agent, and 44.61 g of ion-exchanged water were added and dissolved to prepare a first stage monomer aqueous solution.

The prepared monomer aqueous solution was added to a separable flask, the inside of the flask was sufficiently replaced with nitrogen while stirring, and the flask was then immersed in a water bath at 70°C to be heated to allow the polymerization reaction to proceed for 30 minutes, thereby obtaining a first stage polymerization slurry solution.

On the other hand, 128.8 g (1.44 mol) of a 80.5% by mass aqueous solution of acrylic acid serving as an ethylenically unsaturated monomer was charged in another beaker having an internal volume of 500 mL, 144.2 g of a 30% by mass aqueous solution of sodium hydroxide was added dropwise thereto while being cooled from the outside to perform 75% by mol of neutralization, and thereafter, 0.1288 g (0.477 mmol) of potassium persulfate serving as a peroxide, 0.0090 g (0.052 mmol) of ethylene glycol diglycidyl ether serving as an internal crosslinking agent, and 16.64 g of ion-exchanged water were added and dissolved to prepare a second stage monomer aqueous solution.

While stirring is performed at a rotation speed of the stirrer of 1000 rpm, the above-mentioned separable flask system was cooled to 27°C, and then the total amount of the above-mentioned second stage monomer aqueous solution was added to the above-mentioned first stage polymerization slurry solution. Thereafter, the inside of the system was replaced with nitrogen for 30 minutes, the flask was again immersed in a water bath at 70°C to be heated to cause a polymerization reaction, the internal temperature reached 82°C, and 60 g of ion-exchanged water was then added thereto to obtain a hydrogel-like polymer. At this time, the moisture percentage calculated by the following expression was 169% by mass.

The moisture percentage (% by mass) of the hydrogel-like polymer is calculated by the following expression.

$$\text{Moisture percentage} = (\text{Ww}/\text{Ws}) \times 100$$

Ww: Water amount of the hydrogel-like polymer obtained by adding water amount added and water amount used if necessary when mixing a radical polymerization initiator, a flocculant, a surface crosslinking agent or the like to an amount obtained by subtracting water amount discharged to the outside of the system in the step such as a drying step from water amount contained in a monomer aqueous solution before polymerization in entire polymerization step.

Ws: Solid content calculated from the charged amount of materials such as the ethylenically unsaturated monomer, the crosslinking agent, and the radical polymerization initiator, which constitute the hydrogel-like polymer.

Thereafter, the flask was immersed in an oil bath set at 125°C, and 284.4 g of water was extracted to the outside of the system while n-heptane is refluxed by azeotropic distillation of n-heptane and water. Thereafter, 4.42 g (0.507 mmol) of a 2 mass% aqueous solution of ethylene glycol diglycidyl ether was added to the flask as a surface crosslinking agent, and the mixture was held at 82°C for 2 hours. Thereafter, n-heptane was evaporated at 125°C and dried to obtain a dried product (polymer particles). This dried product was allowed to pass through a sieve having an opening of 850 $\mu$m, and 0.1% by mass of amorphous silica (Oriental Silicas Corporation, Tokusil NP-S) was mixed with the dried product to obtain 235.2 g of the water-absorbent resin particles. The median particle diameter of the particles was 346 $\mu$m.

(Example 2)

Water-absorbent resin particles in an amount of 225.4 g were obtained in the same manner as in Example 1, except that 300.1 g of water was extracted to the outside of the system by azeotropic distillation. The median particle diameter of the particles was 401 $\mu$m.

(Example 3)

Water-absorbent resin particles in an amount of 231.3 g were obtained in the same manner as in Example 1, except that the stirring was performed at a rotation speed of the stirrer of 600 rpm when the dispersant and the surfactant were dissolved, 100 g of ion-exchanged water was added after the second stage polymerization to obtain a hydrogel-like polymer having a moisture percentage of 188% by mass, and 312.6 g of water was extracted to the outside of the system by azeotropic distillation. A median particle diameter of the particles was 359 $\mu$m.

(Comparative Example 1)

Water-absorbent resin particles in an amount of 225.2 g were obtained in the same manner as in Example 1, except that the amount of the ethylene glycol diglycidyl ether used as an internal crosslinking agent for preparing the first stage monomer aqueous solution was changed to 0.0101 g (0.058 mmol), the amount of the potassium persulfate used as a peroxide for preparing the second stage monomer aqueous solution was changed to 0.1030 g (0.381 mmol), the amount of the ethylene glycol diglycidyl ether used as an internal crosslinking agent for preparing the second stage monomer aqueous solution was changed to 0.0116 g (0.067 mmol), the ion-exchanged water was not added after the polymerization of the second stage, and the moisture percentage of the obtained hydrogel-like polymer was 142% by mass, and 254.2 g of water was extracted to the outside of the system by azeotropic distillation. The median particle diameter of the water-absorbent resin particles was 367 $\mu$m

(Comparative Example 2)

Water-absorbent resin particles in an amount of 228.4 g were obtained in the same manner as in Comparative Example 1, except that 275.5 g of water was extracted to the outside of the system by azeotropic distillation. A median particle diameter of the water-absorbent resin particles was 347 $\mu$m.

<Measurement of Water-permeable Rate>

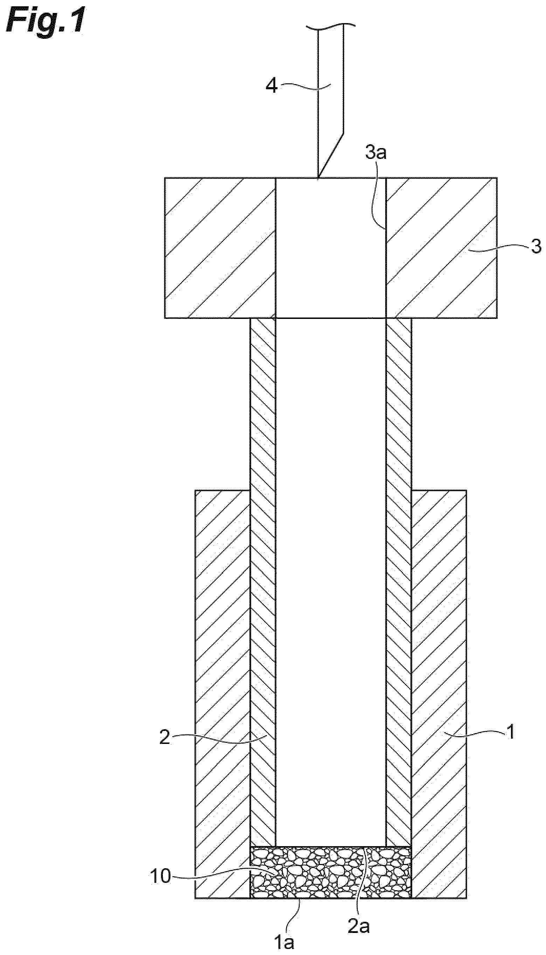

The measurement of a liquid permeation rate of the swollen gel was performed using instruments shown in Fig. 1. The measurement unit includes a cylindrical container 1 made of an acrylic resin, which has a 250-mesh nylon mesh sheet 1a at a bottom, and a cylindrical container 2 made of an acrylic resin, which is put into the cylindrical container 1 and has a nylon mesh sheet 2a at a bottom part. The cylindrical container 1 has an inner diameter of 26 mm, an outer diameter of 35 mm, and a height of 105 mm. The cylindrical container 2 has an inner diameter of 19 mm, an outer diameter of 25 mm, and a height of 145 mm. The cylindrical container 2 can move up and down within the recess of the cylindrical container 1 without resistance.

The measurement of the water-permeable rate was performed in the environment of a temperature of 25 $\pm$ 2°C and a humidity of 50 $\pm$ 10% as follows. The water-absorbent resin particles 10 in an amount of 0.250 g of were uniformly dispersed into the cylindrical container 1, the cylindrical container 2 was inserted thereon, the water-absorbent resin particles 10 were sandwiched between the nylon mesh sheet 1a and the nylon mesh sheet 2a, and a cylindrical-shaped weight 3 having a through-hole 3a with an inner diameter of 20 mm and a height of 35 mm was placed on the cylindrical container 2. As a result, the measurement unit us provided with the cylindrical container 1, the cylindrical container 2, the water-absorbent resin particles 10 in a dried state, and the weight 3 was formed. At this time, the total mass of the cylindrical container 2 and the weight 3 was 830 g. The ion-exchanged water 40.0 g was injected into the measurement unit from 180 mm above the bottom of the cylindrical container 1 at a constant rate of 10 g/sec by using a burette 4. The liquid that passed through the water-absorbent resin particles 10 in the measurement unit and flowed out by dropping from the nylon mesh sheet 1a (lower part of the measurement unit) of the cylindrical container 1 was stored in another container, and the mass of the stored liquid was measured and recorded as the amount of water (g) that flowed out from the gel to the outside. A time period from when the ion-exchanged water was injected to when the last droplet was added dropwise from the nylon mesh sheet 1a of the cylindrical container 1 into the container as a time (seconds) until the flowing out stops was measured, and recorded as a time (seconds) until the flowing out stops. The results are listed in Table 1.

The water-permeable rate was calculated by the following expression based on the time until the measured flowing out stops and the amount of water that has flowed out from the gel to the outside. The results are listed in Table 1.

Water-permeable rate (g/sec) = water amount (g) that has flowed out from the gel to the outside/time (sec) until the flowing out stops

[Water Retention Capacity]

The water retention capacity of the water-absorbent resin particle in the physiological saline was measured by the following procedure in an environment of a temperature of 25 ± 2°C and a humidity of 50 ± 10%. First, a cotton bag (cotton broadcloth No. 60, a width of 100 mm × a length of 200 mm) into which 2.0 g of the weighted water-absorbent resin particles had been weighed was placed in a beaker having the internal volume of 500 mL. After 500 g of the physiological saline was poured into the cotton bag containing the water-absorbent resin particles at one time so that lumps could not be produced, the upper part of the cotton bag was bound with a rubber band, and the cotton bag was left to stand for 30 minutes to swell the water-absorbent resin particles. The cotton bag after an elapse of 30 minutes was dehydrated for 1 minute using a dehydrator (manufactured by KOKUSAN Co., Ltd., product number: H-122) which had been set to have the centrifugal force of 167 G, and a mass Wa [g] of the cotton bag containing the swollen gel after dehydration was then measured. The same operation was performed without addition of the water-absorbent resin particles, an empty mass Wb [g] at the time when the cotton bag was wet was measured, and the water retention capacity of the water-absorbent resin particle in the physiological saline was calculated from the following expression.

$$\text{Water retention capacity [g/g]} = (Wa - Wb)/2.0$$

(Median Particle Diameter)

The median particle diameter of the particles was measured according to the following procedure in an environment of room temperature (25 ± 2°C) and a humidity of 50 ± 10%. The continuous fully automatic sonic vibration-type sieving measuring apparatus (Robot shifter RPS-205, manufactured by Seishin Enterprise Co., Ltd.) was used to measure the particle size distribution of 5 g of the water-absorbent resin particles was measured with sieves having openings of 850 μm, 600 μm, 500 μm, 425 μm, 300 μm, 250 μm, and 180 μm and a tray in accordance with JIS standards. The relationship between the opening of the sieve and the integrated value of the mass percentage of the particles remaining on the sieve was plotted on logarithmic probability paper by integrating in the order from the one having the largest particle diameter on the sieve with respect to this particle size distribution. The plots on the probability paper are connected with a straight line to obtain the particle diameter corresponding to a cumulative mass percentage of 50% by mass as the median particle diameter.

[Swelling Height of Water Bag and Mass of Water Bag]

(Production of Water Bag)

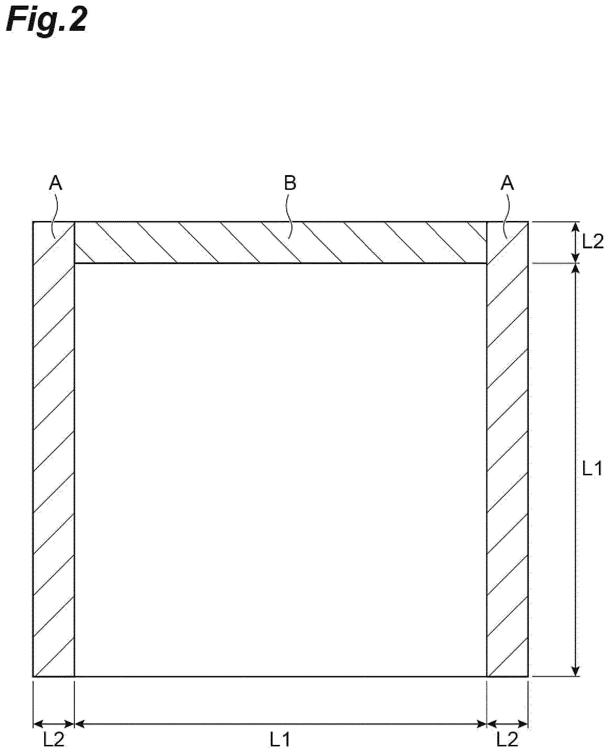

Fig. 2 is a diagram showing a water bag used for evaluation. A non-woven fabric (product name: heat pack MWA-18, manufactured by Nippon Paper Papylia Co., Ltd.) having a size of 220 mm × 120 mm was folded in half, and the portions of the non-woven fabric shown by A in Fig. 2 were pressed against each other by heat sealing to produce a non-woven fabric bag having two pressing sections and a storing section that stores the water-absorbent resin particles. A length L2 of each of the pressing sections in the lateral direction is 10 mm. A length L1 of one side of the storing section is 100 mm. The water-absorbent resin particles was weighed in an amount of 4.0 g and stored in the storing section of the non-woven fabric bag. Thereafter, the non-woven fabric bag was closed by pressing the sections shown in B of Fig. 2 by heat sealing to produce a water bag having a size of 100 mm × 100 mm.

(Measurement of Height and Mass of Water Bag)

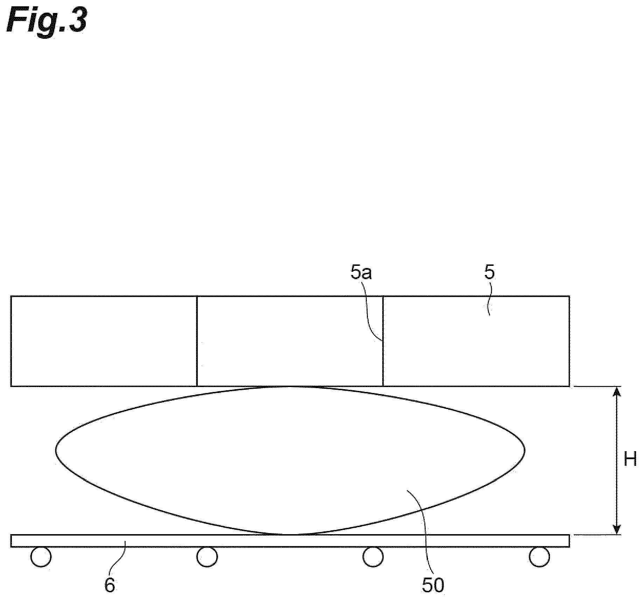

In an environment of a temperature of 25 ± 2°C and a humidity of 50 ± 10%, a wire mesh 6 (opening size: 20 mm × 20 mm, wire diameter: 3 mm) was horizontally placed on a vat (outer dimensions 475 mm × 345 mm × height 112 mm), the above-mentioned water bag 50 in which the internal water-absorbent resin particles were uniformly spread was placed on the wire mesh 6 as shown in Fig. 3, and the weight 5 was further arranged thereon. The weight 5 has a weight of 1.00 kg, a square main surface having each side of 100 mm, and a height of 15 mm. The weight 5 has a through-hole 5a having a diameter of 47 mm at the center of the main surface. Ion-exchanged water was injected in an amount of 1000 mL at a constant rate of 10 g/sec from a position vertically 5 cm above the center of the water bag by using a burette. 30 seconds after the injection was completed, the height H from the wire mesh 6 to the corners of the bottom surface of the weight 5 was measured at four locations, and the average thereof was defined as the height of the water bag (mm). Thereafter, the weight 5 was removed, and the mass (g) of the water bag 50 was measured.

[Table 1]

| Example Comparative Example | Water retention capacity [g/g] | Dry powder water-permeation measurement under load | | | Effect measurement | |
|---|---|---|---|---|---|---|
| | | Time until flowing out stops [sec] | Amount of water that has flowed out from gel to outside [g] | Water-permeable rate [g/sec] | Height of water bag [mm] | Total weigh of water bag [g] |
| Example 1 | 34 | 4.63 | 5.60 | 1.21 | 25 | 198 |
| Example 2 | 39 | 3.80 | 2.33 | 0.61 | 16 | 154 |
| Example 3 | 36 | 6.15 | 3.80 | 0.62 | 22 | 188 |
| Comparative Example 1 | 39 | 4.74 | 1.53 | 0.32 | 6 | 115 |
| Comparative Example 2 | 52 | 0.00 | 0.00 | 0.00 | 5 | 97 |

In the water bag containing the water-absorbent resin particles of Examples, it was shown that the height and the total weight during swelling were large, and the swelling could be performed quickly.

**Reference Signs List**

1, 2: cylindrical container

1a, 2a: nylon mesh sheet

3, 5: weight

3a, 5a: through-hole

4: burette

6: wire mesh

50: water bag

H: height of water bag

**Claims**

1. A water-absorbent resin particle comprising a crosslinked polymer having, as a monomer unit, at least one ethylenically unsaturated monomer selected from the group consisting of (meth)acrylic acid and a salt thereof, a ratio of the (meth)acrylic acid and the salt thereof being 70% to 100% by mol with respect to a total amount of the monomer unit in the crosslinked polymer,
wherein a water-permeable rate is 0.40 to 2.50 g/sec, and the water-permeable rate is a value determined according to a procedure described below:

dispersing 0.250 g of the water-absorbent resin particle uniformly on a bottom of a first cylindrical container that has the mesh bottom, an inner diameter of 26 mm, an outer diameter of 35 mm, and a height of 105 mm;
forming a measurement unit that is provided with the first cylindrical container, the water-absorbent resin particle, a second cylindrical container having a mesh bottom, an inner diameter of 19 mm, an outer diameter of 25 mm, and a height of 145 mm, and a weight by inserting the second cylindrical container into the first cylindrical container and placing the weight provided with a through-hole having an inner diameter of 20 mm on the second cylindrical container, wherein a total mass of the second cylindrical container and the weight is 830 g, and liquid is injectable with the through-hole of the weight;

injecting 40.0 g of ion-exchanged water into the measurement unit at a constant rate of 10 g/sec from 180 mm vertically above a center of the bottom of the first cylindrical container;

recording a total amount of the liquid that passes through the water-absorbent resin particle in the measurement unit and flows out from the bottom of the first cylindrical container as an amount of water (g) flowed out from a gel, and recording a time period from when the ion-exchanged water is injected to when a last droplet flows out from the bottom of the first cylindrical container as a time (second) until the flowing out stops; and calculating the water-permeable rate by an expression:

the water-permeable rate (g/sec) = the amount of water that has flowed out from the gel (g)/the time period until the flowing out stops (sec).

2. The water-absorbent resin particle according to claim 1,
wherein the time until the flowing out stops is 2.00 seconds to 10.00 seconds.

3. The water-absorbent resin particle according to claim 2,
wherein the amount of water that has flowed from the gel to an outside is 0.80 g to 15.00 g.

4. The water-absorbent resin particle according to any one of claims 1 to 3,
wherein a water retention capacity of a physiological saline is 45 g/g or less.

*Fig.1*

# Fig.2

# Fig.3

<table>
<tr><td colspan="2" align="center">**INTERNATIONAL SEARCH REPORT**</td><td>International application No.<br><br>**PCT/JP2023/010431**</td></tr>
</table>

| | |
|---|---|
| **A.** | **CLASSIFICATION OF SUBJECT MATTER** |

*B01J 20/26*(2006.01)i; *C08F 20/06*(2006.01)i; *E02B 3/04*(2006.01)i
FI:  B01J20/26 D; C08F20/06; E02B3/04 301

According to International Patent Classification (IPC) or to both national classification and IPC

| | |
|---|---|
| **B.** | **FIELDS SEARCHED** |

Minimum documentation searched (classification system followed by classification symbols)

B01J20/26; C08F20/06; E02B3/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2018/159803 A1 (SUMITOMO SEIKA CHEMICALS CO., LTD.) 07 September 2018 (2018-09-07) | 1-4 |
| A | WO 2005/073469 A1 (SANYO CHEMICAL INDUSTRIES, LTD.) 11 August 2005 (2005-08-11) | 1-4 |
| A | WO 2019/189326 A1 (SUMITOMO SEIKA CHEMICALS CO., LTD.) 03 October 2019 (2019-10-03) | 1-4 |
| A | JP 2005-299115 A (MITSUBISHI CHEMICALS CORP) 27 October 2005 (2005-10-27) | 1-4 |
| A | WO 2012/014747 A1 (SUMITOMO SEIKA CHEMICALS CO., LTD.) 02 February 2012 (2012-02-02) | 1-4 |
| A | WO 2016/104374 A1 (SUMITOMO SEIKA CHEMICALS CO., LTD.) 30 June 2016 (2016-06-30) | 1-4 |
| A | JP 2003-301436 A (KINDEN CORP) 24 October 2003 (2003-10-24) | 1-4 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/010431**

| Patent document cited in search report | | | Publication date (day/month/year) | Patent family member(s) | | | Publication date (day/month/year) |
|---|---|---|---|---|---|---|---|
| WO | 2018/159803 | A1 | 07 September 2018 | US | 2020/0002445 | A1 | |
| | | | | EP | 3590980 | A1 | |
| | | | | CN | 110325557 | A | |
| | | | | KR | 10-2019-0118166 | A | |
| WO | 2005/073469 | A1 | 11 August 2005 | US | 2007/0125568 | A1 | |
| | | | | EP | 1741835 | A1 | |
| | | | | CN | 1910323 | A | |
| WO | 2019/189326 | A1 | 03 October 2019 | US | 2021/0138434 | A1 | |
| | | | | EP | 3779048 | A1 | |
| | | | | CN | 111902581 | A | |
| JP | 2005-299115 | A | 27 October 2005 | (Family: none) | | | |
| WO | 2012/014747 | A1 | 02 February 2012 | US | 2013/0123454 | A1 | |
| | | | | EP | 2599794 | A1 | |
| | | | | CN | 103003312 | A | |
| | | | | KR | 10-2013-0131288 | A | |
| | | | | KR | 10-2017-0090524 | A | |
| | | | | TW | 201213348 | A | |
| WO | 2016/104374 | A1 | 30 June 2016 | JP | 2016-121297 | A | |
| JP | 2003-301436 | A | 24 October 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018159803 A1